# DEMANDE DE BREVET EUROPEEN

(11) **EP 1 042 971 A1**
(43) Date de publication de la demande: **11.10.2000**
(21) Numéro de dépôt: 00400934.6
(22) Date de dépôt: 05.04.2000
(51) Int. Cl.: A44B 18/00

(54) **Bande oblongue formant partie auto-agrippante mâle, cylindre à former pour sa fabrication et procédé de fabrication d'une bande de ce genre**

(30) Priorité: 07.04.1999 FR 9904331
(71) Demandeur: Aplix Société Anonyme, 75008 Paris (FR)
(72) Inventeur: Ducauchuis, Jean-Pierre, 44100 Nantes (FR); Hammer, Pavel, 72116 Mössingen/Oschingen (DE)
(74) Mandataire: Eidelsberg, Victor Albert

(57) **Abrégé**

Partie auto-agrippante mâle d'un système auto-agrippant, constituée d'une bande 3 oblongue, c'est-à-dire ayant une dimension en longueur plus grande que sa dimension en largeur, et de crochets issus de la bande 3 et disposés suivant des rangées parallèles les unes aux autres dans le sens de la longueur et à distance les unes des autres dess crochets étant orientés dans un sens et les autres crochets dans un autre sens opposé audit un sens, sensiblement tous les crochets sont orientés suivant une direction faisant un angle a sensiblement non nul avec la direction de la longueur de la bande 3.

## Description

La présente invention concerne les systèmes auto-agrippants, et notamment une partie auto-agrippante mâle d'un système de ce genre, en matériau synthétique plastique ou thermoplastique, constituée d'une bande en matériau synthétique, plastique ou thermoplastique, de forme oblongue, sur laquelle sont formés, par exemple par pressage de la matière synthétique dans des cavités, des moyens d'accrochage, par exemple sous la forme de crochets, de harpons hémisphériques ou analogues.

La présente invention se rapporte également à un cylindre à former servant à la fabrication d'une partie auto-agrippante mâle de ce genre, ainsi qu'à un procédé de fabrication d'une partie auto-agrippante mâle de ce genre.

Suivant l'art antérieur, les parties auto-agrippantes mâles sont fabriqués de la manière suivante.

Une bande en matière synthétique thermoplastique est extrudée entre deux cylindres, un cylindre à former et un cylindre à presser. Des disques annulaires sont disposés autour du cylindre à former, en étant adjacents les uns aux autres. A l'extrémité distale de ces disques annulaires, sont ménagées, dans un disque sur deux, des cavités en forme de crochets. Lors du déroulement de la bande en matière thermoplastique, celle-ci est pressée dans les cavités par le cylindre de pressage et des crochets sont ainsi formés sur la bande en matériau plastique.

Les cavités en forme de crochet réalisées aux extrémités périphériques extérieures (distales) des disques annulaires sont orientées toutes dans le même sens sur un disque, et toutes dans le sens opposé dans le disque suivant comportant des cavités-crochets, c'est-à-dire un deuxième disque après un disque intermédiaire sans cavités. Ainsi, on obtient des rangées de crochets orientés alternativement dans le sens de rotation du disque et dans le sens opposé à la rotation du disque et séparées les unes des autres d'une distance correspondant à l'épaisseur d'un disque intermédiaire sans cavité.

Le produit obtenu, à savoir une bande oblongue en matériau thermoplastique suivant la longueur de laquelle ont été formées des rangées de crochets, à distance les unes des autres et ayant des orientations des crochets alternées à chaque rangée, présente l'inconvénient suivant. La moitié des crochets qui sont dans le sens défilement machine (c'est-à-dire dans le sens de rotation du cylindre) est de meilleure qualité, en ce qui concerne leur capacité à s'accrocher, que l'autre moitié. En effet, les crochets implantés dans le sens de défilement conservent bien leur forme souhaitée, tandis que les autres ont tendance à se déformer après leur sortie de la cavité de formation et à perdre leur forme acquise, et notamment à s'aplatir en direction de la bande, résultant en un accrochage médiocre.

Il s'ensuit que ces bandes formant partie auto-agrippante mâle n'ont pas les mêmes aptitudes à l'accrochage suivant le sens de la traction qui peut leur être imposé.

Le brevet US-A-5.884.374 décrit une partie mâle d'auto-agrippant de laquelle sont issus des crochets, des crochets étant orientés dans un sens et les autres crochets dans l'autre sens. Cependant, tous les crochets sont orientés dans la direction de la longueur de la bande (α = 0°) de sorte que lorsque les crochets sont sortis de leur moule à la fabrication, certains (ceux dans le sens de déroulement) se déforment plus que d'autres (ceux dans l'autre sens).

Le document DE-A-4.229.062 décrit une partie mâle d'auto-agrippant de laquelle sont issus des crochets, des crochets étant orientés dans un sens, les autres crochets étant soit orientés dans le sens opposé soit dans les deux sens transversaux audit un sens. En outre, la moitié des crochets est orientée dans une première direction et l'autre moitié des crochets dans une autre direction perpendicualire à la première direction.

Outre le fait que ce document ne mentionne nullement le problème posé et résolu par la présente invention, il s'agit d'une configuration particulièrement compliquée des crochets, difficile à réaliser à grande échelle, le système maillé représenté par exemple à la figure 8 étant très compliqué, voir en fait impossible à réaliser dans la pratique.

La présente invention vise à palier ces inconvénients en proposant une partie auto-agrippante mâle dont la qualité d'accrochage à la partie femelle du système auto-agrippant ne dépend pas du sens suivant lequel une traction est effectuée et notamment une partie mâle qui s'accroche de manière identique pour une traction exercée dans un sens, par exemple suivant la direction en longueur de la bande oblongue, que pour une traction exercée dans le sens opposé.

Suivant l'invention, la partie auto-agrippante mâle constituée d'une bande oblongue, c'est-à-dire ayant une dimension en longueur plus grande que sa dimension en largeur, et de crochets issus de la bande et disposés suivant des rangées parallèles les unes aux autres dans le sens de la longueur et à distance les unes des autres, des crochets étant orientés dans un sens et les autres crochets étant orientés dans le sens opposé audit un sens, est caractérisée en ce qu'au moins 51 % des crochets, et de préférence sensiblement tous les crochets, sont orientés suivant une direction unique faisant un angle sensiblement non nul avec la direction de la longueur de la bande.

En prévoyant ainsi de former les crochets orientés inclinés, par rapport à la direction en longueur de la bande, on s'assure d'un accrochage moins inégal entre le cas où la traction (l'arrachage de la partie femelle de la partie mâle) s'effectue droite-gauche (dans un sens parallèle à la longueur de la bande) ou gauche-droite (dans le sens opposé). En effet, la différence entre la résistance à l'arrachement des crochets formés en étant orientés dans le sens de déroulement de la bande sur les cylindres et celle des crochets formés en étant orientés dans l'autre sens va diminuer au fur à mesure que l'angle entre l'orientation des crochets et la longueur de la bande va croître vers 90°. En effet, cette différence, qui est maximale pour un angle de 0° va diminuer d'un facteur égal au cosinus de l'angle, puiqu'au fur à mesure que l'angle va augmenter, la composante suivant l'axe des X correspondant à la direction de déroulement va diminuer au profit de la composante des Y correspondant à la direction transversale à la direction de déroulement. Par conséquent, pour une différence de par exemple ΔF des déformations des crochets pour l'angle nul, cette différence ne sera plus, pour un angle de 45°, que de ΔF cos 45° = 0,7 ΔF, soit une amélioration de 30 %.

Suivant un mode de réalisation préféré de l'invention, les crochets sont orientés suivant la direction de la largeur de la bande (angle (α) = 90°). Dans ce cas, il n'y a plus aucune différence entre les résistances au décrochage entre les crochets suivant qu'ils sont orientés dans un sens ou un autre, tous les crochets conservant aussi bien leur déformation que les autres, tous les crochets étant déformés de manière identique lors de la sortie des crochets des cavités respectives.

Suivant un perfectionnement de l'invention, sensiblement tous les crochets d'une rangée sont orientés dans le même sens et le sens d'orientation des crochets est alterné toutes les n rangées, n entier positif de préférence égal à 1. On obtient ainsi un accrochage particulièrement homogène, dans toutes les directions de contraintes.

Suivant un perfectionnement, les crochets d'une rangée sont de sens alterné tous les n crochets, n entier positif de préférence égal à 1.

En outre, la fabrication du cylindre à former est simplifiée. En effet, pour une largeur de bande et un nombre de rangées données, le procédé de l'art antérieur nécessite un nombre donné de disque annulaire. Or, suivant l'invention, pour former des bandes on n'utilise plus de disques mais des lamelles disposées le long des génératrices du cylindre, côte-à-côte, en s'étendant angulairement sur toute la périphérie du cylindre et le nombre de ces lamelles, à épaisseur égal avec celle des disques, est moindre que celui des disques annulaires, pour une même largeur de bande.

Ainsi la présente invention vise-t-elle également un nouveau cylindre à former comportant des moyens d'accrochage destinés à accrocher des lamelles, et des lamelles disposées parallèlement à l'axe longitudinal du cylindre, certaines lamelles comportant au niveau de leur bord extérieur des cavités en forme de crochet orientées dans la direction de l'axe longitudinal, une partie de ces dites certaines lamelles ayant leurs cavités orientées dans un sens et l'autre partie leurs cavités orientées dans l'autre sens.

La présente invention vise également un procédé de fabrication de partie d'accrochage mâle suivant la présente invention qui consiste à faire défiler du matériau synthétique thermoplastique ou plastique, entre un cylindre à presser et un cylindre à former suivant la présente invention, l'angle sensiblement non nul étant réglé par l'inclinaison mutuelle des deux cylindres.

Enfin, la présente invention vise également un ensemble laminé comportant un support sur lequel est fixé une partie mâle auto-agrippante suivant l'invention, le support étant par exemple une couche-culotte.

On décrit maintenant uniquement à titre d'exemple, un mode de réalisation préféré de l'invention, en se rapportant aux dessins annexés, dans lesquels :
la figure 1 est un schéma suivant une vue de côté d'un dispositif servant à la fabrication d'une partie auto-agrippante mâle suivant l'invention,
la figure 2 est une vue en perspective de plusieurs lamelles destinées à être fixées sur un cylindre à former,
la figure 3 est une vue à plus grande échelle d'une partie de la figure 2,
la figure 4 est une vue d'une partie auto-agrippante mâle suivant l'invention,

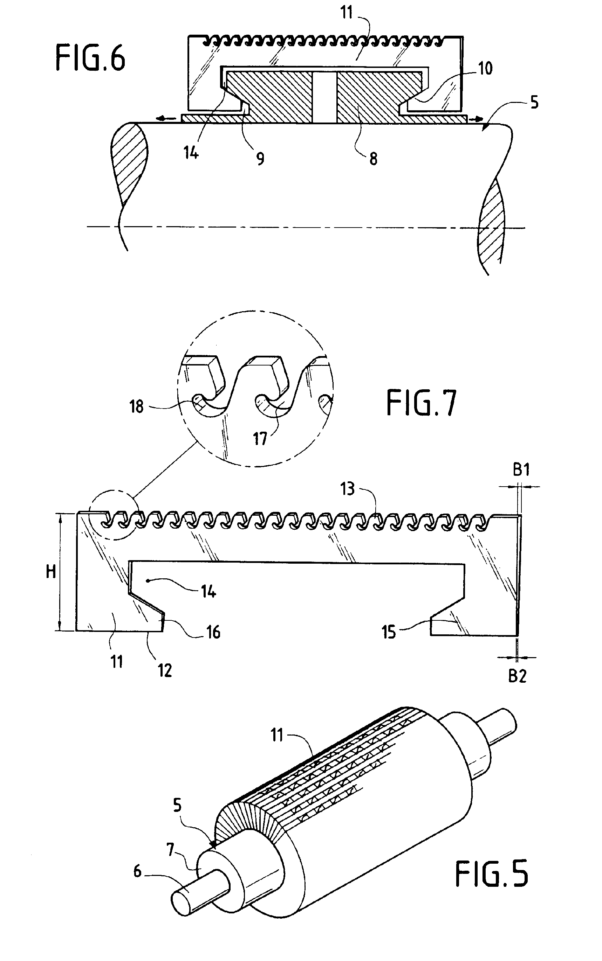

la figure 5 est une vue en perspective d'un cylindre à former suivant l'invention,
la figure 6 est une vue en coupe transversale longitudinale du cylindre de la figure 5,
la figure 7 est une vue de côté d'une lamelle du cylindre à former de la figure 5, et
la figure 8 est une vue éclatée des lamelles de la figure 2.

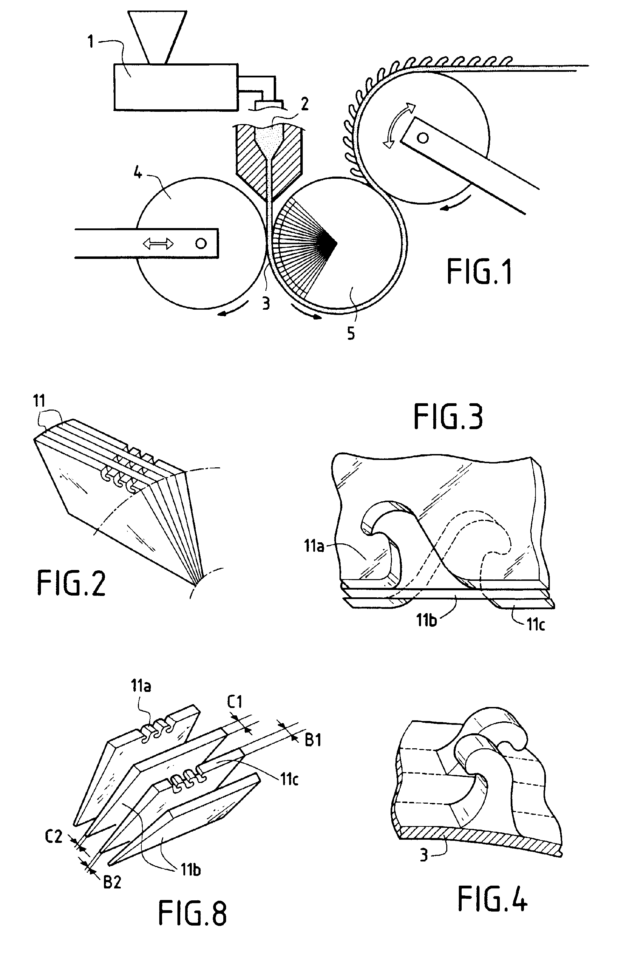

A la figure 1, il est représenté un dispositif de production d'une partie mâle d'un élément auto-agrippant.

Un extrudeur 1 alimente une buse 2 d'extrusion en un matériau synthétique thermoplastique, sous la forme d'une bande 3. La bande 3 est guidée, à la sortie de la buse 2, entre un cylindre 4 à presser et un cylindre 5 à former.

Le cylindre 5 à former est constitué d'un arbre 6 transversal sur lequel est monté, de manière coaxiale et solidaire en rotation, un cylindre 7. Sur ce cylindre 7, il est monté une bague 8 annulaire formant support comportant deux encoches 9 et 10 annulaires. Ces encoches 9 et 10 annulaires servent à la fixation de lamelles 11.

Les lamelles 11 ont sensiblement la forme d'un parallélépipède trapézoïdal, c'est-à-dire que les deux côtés transversaux à la direction en longueur du parallélépipède ont la forme d'un trapèze, ici isocèle. Le côté 12 inférieur longitudinal de la lamelle 11 est ainsi d'épaisseur ou largeur inférieure à celle du côté 13 supérieur longitudinal de la lamelle 11. Dans la partie inférieure de la lamelle 11, il est formé un évidemment 14 partiellement fermé par deux pattes 15 et 16 dont la forme est complémentaire de celle des encoches 9 et 10 pour permettre, par insertion de ces pattes 15 et 16 dans les encoches 9 et 10, la fixation de la lamelle 11 à la bague 8, à la manière d'une queue d'aronde.

Sur le côté 13 supérieur longitudinal de la lamelle 11, il est formé des cavités 17 ayant une forme de crochets. Ces crochets sont constitués d'une base et d'une tête 18. Ces cavités 17 sont formées de sorte que tous les crochets d'une lamelle sont parallèles entre eux et tous orientés dans le sens de la longueur de la lamelle.

On entend dans cette demande de brevet, par orientation d'un crochet, la direction selon laquelle le crochet est en mesure de s'accrocher dans un trou d'accrochage correspondant. Ainsi, à la figure 7, les crochets sont orientés dans la direction du plan du dessin, dans le sens droite-gauche.

Une pluralité de lamelles 11a, 11b, 11c sont fixées adjacentes les unes aux autres, de manière à faire le tour complet du cylindre 7. La forme en trapèze isocèle des côtés transversaux permet de réaliser facilement le tour du cylindre.

Dans cet exemple, le diamètre extérieur du cylindre 7 est de 250 mm, l'épaisseur (B2) du côté inférieur est de 0,2 mm et 3927 lamelles sont disposées côte-à-côte, autour du cylindre 7.

Une lamelle sur deux ne comporte pas de crochets à son côté 13 supérieur et ces lamelles 11b séparent deux lamelles 11a et 11c ayant chacune à leur côté 13 supérieur une rangée de crochets, tous parallèles à la direction en largeur. Cependant, les rangées des crochets sont orientées dans des sens opposés (11a, droite-gauche, 11c, gauche-droite), ce cycle de quatre lamelles, c'est-à-dire une lamelle avec crochets droite-gauche, une lamelle vierge, une lamelle avec crochets gauche-droite, et une lamelle vierge, se répétant sur tout le pourtour du cylindre.

La bande 3 en matériau plastique passe à l'état fondu entre le cylindre 4 à presser et le cylindre 5 à former. Le cylindre 4 à presser presse la bande contre le cylindre 5 à former, de sorte que le matériau plastique pénètre dans les cavités 17 en forme de crochet de sorte qu'il se forme sur la bande 3, à un de ses côtés des rangées de crochets, les crochets de deux rangées de crochets consécutives étant orientés dans des sens opposés, mais suivant la même direction perpendiculaire à la direction longitudinale ou en longueur de la bande. Les crochets sont ainsi orientés en faisant un angle α = 90° avec la direction en longueur de la bande.

Si l'on souhaite obtenir un angle a non nul différent de 90°, il suffit par exemple de le régler en modifiant l'inclinaison mutuelle des deux cylindres. Ainsi dans le cas où les deux cylindres sont parallèles (figure 1), l'angle α obtenu est de 90°. En inclinant le cylindre à former d'un angle β par rapport au cylindre à presser on va obtenir un angle α = 90°-β, ce qui permet ainsi effectivement de régler l'angle a souhaité, sachant qu'un angle α de 90° sera préféré.

Une autre manière de procéder consiste à disposer chaque lamelle non plus parallèlement au cylindre 5 mais en faisant l'angle β = 90°-α correspondant à l'angle α souhaité et à incurver chaque lamelle pour que son bord inférieur soit bien en contact sur toute sa longueur avec la surface extérieure du cylindre. Plus l'angle β est grand, plus la courbure à donner à la lamelle est importante. Dans le cas limite β = 90° (soit α = 0°) on retrouve tout simplement le cas déjà connu d'un anneau comme dans le procédé Velcro. Cependant, le procédé Velcro ne prévoit que ce cas α = 0° qui est différent de la présente invention.

Les lamelles 11 peuvent être fabriquées suivant différents procédés, par exemple par découpe au laser, érosion, gravure, corrosion, emboutissage, de coupure au jet d'eau, etc. Elles peuvent être par exemple en les matériaux suivants : acier non trempé, trempé, acier nirostra, cuivre, acier argenté (CuNi 18 Zn20) ainsi qu'en des matières synthétiques.

La matière synthétique thermoplastique pour la bande peut être un mono, co ou tri-polymère, comme par exemple le polypropylène, le polyamide, le polyéthylène, le polyester, le théréphtalate, le polybuthylique, le chlorure de polyvinyle, et analogue ainsi que des matériaux recyclables ou biodégradables à base naturelle qui peuvent être mélangés et intégrés à tous les polymères connus.

## Revendications

1. Partie auto-agrippante mâle d'un système auto-agrippant, constituée d'une bande (3) oblongue, c'est-à-dire ayant une dimension en longueur plus grande que sa dimension en largeur, et de crochets issus de la bande (3) et disposés suivant des rangées parallèles les unes aux autres dans le sens de la longueur et à distance les unes des autres, des crochets étant orientés dans un sens et les autres crochets dans le sens opposé, caractérisée en ce que sensiblement tous les crochets, sont orientés suivant une seule direction faisant un angle (α) sensiblement non nul avec la direction de la longueur de la bande (3).

2. Partie auto-agrippante mâle suivant la revendication 1, caractérisée en ce que les crochets sont orientés suivant la direction de la largeur de la bande (angle (α) = 90°).

3. Partie auto-agrippante mâle suivant la revendication 1 ou 2, caractérisée en ce que sensiblement tous les crochets d'une rangée sont orientés dans le même sens et le sens d'orientation des crochets est alterné toutes les n rangées, n entier positif de préférence égal à 1.

4. Partie auto-agrippante mâle suivant la revendication 1 ou 2, caractérisée en ce que les crochets d'une rangée sont de sens alterné tous les n crochets, n entier positif, de préférence égal à 1.

5. Cylindre (5) à former caractérisé en ce qu'il comporte des moyens (8, 9, 10, 15, 16) d'accrochage destinés à accrocher des lamelles (11, 11a, 11b, 11c), et des lamelles (11, 11a, 11b, 11c) disposées parallèlement à l'axe longitudinal du cylindre, les unes à côté des autres de manière à faire le tour du cylindre, certaines lamelles (11a, 11c) comportant au niveau de leur bord extérieur des cavités (17) en forme de crochet orientées dans la direction de l'axe longitudinal, une partie (11a) de ces dites certaines lamelles ayant leurs cavités orientées dans un sens et l'autre partie (11c) leurs cavités orientées dans le sens opposé audit un sens.

6. Cylindre à former suivant la revendication 5, caractérisé en ce que les lamelles ont la forme d'un parallélépipède trapézoïdal, un évidement (14) partiellement fermé par deux pattes (15, 16) étant formé dans la partie inférieure de la lamelle (11) pour permettre son accrochage au cylindre par l'intermédiaire des deux encoches (9, 10) annulaire d'une bague (8) annulaire formant support, à la manière d'une queue d'aronde.

7. Cylindre à former suivant la revendication 5 ou 6, caractérisé en ce que chaque lamelle est disposée sur la surface extérieure du cylindre en faisant un angle β = 90°-α avec l'axe du cylindre, et le bord inférieur de chaque lamelle est incurvée de sorte que le bord inférieur est en contact avec la surface extérieure du cylindre sur toute la longueur dudit bord.

8. Procédé de fabrication de parties d'accrochage mâles suivant l'une des revendications 1 à 4, qui consiste à faire défiler du matériau synthétique thermoplastique ou plastique, entre un cylindre (4) à presser et un cylindre (5) à former suivant la revendication 5 ou 6.

9. Ensemble laminé comportant un support sur lequel est fixé une partie mâle auto-agrippante suivant les revendications 1 à 4.

10. Ensemble laminé suivant la revendication 8, caractérisé en ce que le support est une couche-culotte.
